# EUROPEAN PATENT SPECIFICATION

(11) **EP 3 654 434 B1**
(45) Date of publication and mention of the grant of the patent: **10.04.2024**
(21) Application number: 18876317.1
(22) Date of filing: 31.10.2018
(51) Int. Cl.: H01M 10/056, H01M 4/1395, H01M 10/052, C08J 3/24, H01B 1/12, H01M 10/04

(54) **ELECTROLYTE COMPOSITE FOR LITHIUM-SULFUR BATTERY, ELECTROCHEMICAL DEVICE COMPRISING SAME, AND PREPARATION METHOD THEREFOR**
ELEKTROLYTZUSAMMENSETZUNG FÜR LITHIUM-SCHWEFEL-BATTERIE, DIESE ENTHALTENDE ELEKTROCHEMISCHE VORRICHTUNG UND HERSTELLUNGSVERFAHREN DAFÜR
COMPOSITE ÉLECTROLYTIQUE POUR BATTERIE LITHIUM-SOUFRE, DISPOSITIF ÉLECTROCHIMIQUE LE COMPRENANT ET SON PROCÉDÉ DE PRÉPARATION

(30) Priority: 08.11.2017 KR 20170148072
(43) Date of publication of application: 20.05.2020
(73) Proprietor: LG Energy Solution, Ltd., Seoul 07335 (KR); UNIST (Ulsan National Institute of Science and Technology), Ulsan 44919 (KR)
(72) Inventor: PARK, Eunkyung, Daejeon 34122 (KR); LEE, Sang-Young, Ulju-gun Ulsan 44919 (KR); CHO, Sung-Ju, Ulju-gun Ulsan 44919 (KR); JANG, Minchul, Daejeon 34122 (KR); YANG, Doo Kyung, Daejeon 34122 (KR); JUNG, Bora, Daejeon 34122 (KR)
(74) Representative: Hoffmann Eitle
(86) International application number: PCT/KR2018/013087
(87) International publication number: WO 2019/093709

(56) References cited:
- KR-A- 20020 008 704
- KR-A- 20130 004 090
- KR-A- 20150 128 972
- KR-A- 20150 129 181
- KR-A- 20160 146 844
- KR-B1- 101 422 311
- KR-B1- 101 422 311
- US-A1- 2014 342 209

## Description

### [Technical Field]

This application claims the benefit of priority based on Korean Patent Application No. 10-2017-0148072, filed November 08, 2017.

The present invention relates to an electrolyte complex applicable to an electrochemical device. More specifically, it relates to an electrolyte complex for a lithium-sulfur battery, which can improves battery capacity and life characteristic by applying different solid electrolytes to each of the positive electrode and the negative electrode of an electrochemical device, and can reduce the interfacial resistance between the electrolyte and the electrode by integrating the solid electrolyte and the electrode; an electrochemical device including the same; and a method for preparing the electrochemical device.

### [Background Art]

As interest in energy storage technologies continues to grow, the application fields of the energy storage technologies have been extended to mobile phones, tablets, laptops and camcorders, and even electric vehicles (EV) and hybrid electric vehicles (HEV), and therefore, the research and development of electrochemical devices are gradually increasing. In this aspect, electrochemical devices have attracted the most attention, and among them, the development of secondary batteries such as a lithium-sulfur battery capable of charging and discharging has been the focus of particular interest. In recent years, extensive research and development has been conducted to design new electrodes and batteries for the purpose of improving capacity density and specific energy of the batteries.

Among such electrochemical devices, a lithium-sulfur secondary battery has high energy density, and therefore, it is drawing attention as a next generation secondary battery that can replace a lithium ion battery, see e.g. document KR101422311. However, in the lithium-sulfur secondary battery, sulfur (sulfur, Ss), which is used as a positive electrode material, is characterized by being converted into solid polysulfide (e.g.: Li₂S₂, Li₂S) through liquid intermediate polysulfide (e.g.: LizSs, Li₂S₆, Li₂S₄). As a result, there is a problem that the liquid polysulfide melts on the surface of the positive electrode, moves to a separator and the negative electrode, and then is reduced to solid Li₂S on the surface of the separator and the negative electrode.

Namely, in order to realize a lithium-sulfur secondary battery having high capacity and ling lifetime, an electrolyte that facilitates dissolution of the polysulfide is required. However, in this case, the dissolved liquid polysulfide moves to a negative electrode and a separator and is reduced to solid polysulfide, thereby eventually deactivating the negative electrode and blocking the pores formed on the surface of the separator. Thus, there is a serious problem of reducing battery capacity and lifetime. Accordingly, I the related art, in order to realize a lithium-sulfur secondary battery having high capacity and long lifetime, an electrolyte capable of facilitating dissolution of polysulfide but preventing migration of polysulfide to a negative electrode and a separator is being studied and developed.

### [Disclosure]

### [Technical Problem]

Accordingly, an aspect of the present invention provides an electrolyte complex for a lithium-sulfur battery, which can improves battery capacity and life characteristic by applying different solid electrolytes to each of the positive electrode and the negative electrode of an electrochemical device, an electrochemical device including the same, and a method for preparing the electrochemical device.

Another aspect of the present invention provides an electrolyte complex for a lithium-sulfur battery, which can reduce the interfacial resistance between the electrolyte and the electrode by integrating the solid electrolyte and the electrode, an electrochemical device including the same, and a method for preparing the electrochemical device.

### [Technical Solution]

In order to accomplish the above objects, the present invention provides an electrolyte complex for a lithium-sulfur battery comprising two kinds of phase-separated solid electrolytes, as defined in the appended claims, wherein the first electrolyte positioned to the positive electrode side and the second electrolyte positioned to the negative electrode side form a layered structure.

Further, the present invention provides an electrochemical device including an electrolyte complex for a lithium-sulfur battery, which comprises the electrolyte complex and an electrode facing the electrolyte complex.

Further, the present invention provides a method for preparing an electrochemical device comprising an electrolyte complex for a lithium-sulfur battery, as defined in claim 13, which comprises the following steps of: (a) dissolving a lithium salt in an organic solvent having dielectric constant of 30 or more to prepare the first electrolyte solution, and then sequentially adding a crosslinkable monomer and an inorganic particle to the first electrolyte solution followed by stirring and dispersing thereof to prepare the first electrolyte paste; (b) dissolving a lithium salt in an organic solvent having dielectric constant of 20 or less to prepare the second electrolyte solution, and then sequentially adding a crosslinkable monomer and an inorganic particle to the second electrolyte solution followed by stirring and dispersing thereof to prepare the second electrolyte paste; (c) coating the first electrolyte paste on the surface of a positive electrode followed by polymerizing thereof to form the first electrolyte in a solid phase; (d) coating the second electrolyte paste on the surface of the first electrolyte thus formed followed by polymerizing thereof to form the second electrolyte in a solid phase; and (e) attaching a negative electrode on the second electrolyte.

### [Advantageous Effects]

The electrolyte complex for a lithium-sulfur battery according to the present invention, an electrochemical device including the same, and a method for preparing the electrochemical device have advantages of improving battery capacity and life characteristic by applying different solid electrolytes to each of a positive electrode and a negative electrode of the electrochemical device, and also reducing the interfacial resistance between the electrolyte and the electrode by integrating the solid electrolyte and the electrode.

### [Description of Drawings]

FIG. 1 is a mimetic diagram of the side cross-section of the lithium-sulfur battery comprising the electrolyte complex according to Example of the present invention.
Fig. 2 is a mimetic diagram of a process for manufacturing the electrolyte complex according to one Example of the present invention.
Fig. 3 is an image (A) of the integrated an electrolyte complex and an electrode according to one Example of the present invention observed with scanning electron microscope (SEM), and an image (B) of the simply laminated electrolyte complex according to Comparative Example observed by scanning electron microscope.
Fig. 4 is a graph comparing capacity and life characteristic of the lithium-sulfur batteries according to one Example of the present invention and Comparative Examples.
Fig. 5 is a graph showing the surface resistance value of the positive electrodes of the lithium-sulfur batteries according to one Example of the present invention and Comparative Examples.
Fig. 6 is a graph showing the result of XPS analysis of the surface of the negative electrodes of the lithium-sulfur batteries according to one Example of the present invention and Comparative Examples.
Fig. 7 is a graph comparing ion conductivity of the lithium-sulfur batteries according to one Example of the present invention and a Comparative Example.

### [Best Mode]

Hereinafter, the present invention will be described in detail with reference to accompanying drawings.

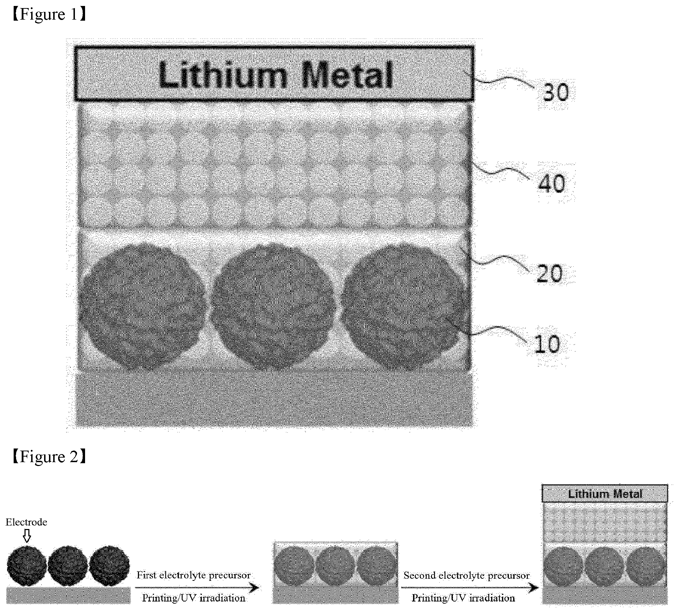

Fig. 1 is a mimetic diagram of the side cross-section of the lithium-sulfur battery comprising the electrolyte complex according to Example of the present invention. As illustrated in Fig. 1, the electrolyte complex for a lithium-sulfur battery according to the present invention comprises two kinds of phase-separated solid electrolytes, wherein the first electrolyte 20 positioned to the positive electrode 10 side and the second electrolyte 40 positioned to the negative electrode 30 side form a layered structure.

In the electrolyte complex for a lithium-sulfur battery, the liquid polysulfide (Li₂S₈, Li₂S₆, Li₂S₄, etc.), which is dissolved from the sulfur positive electrode, is transferred to the separator and the negative electrode, and then blocks the reduction to the solid polysulfide (Li₂S₂, Li₂S, etc) on the surface of the separator and the negative electrode. Accordingly, the deactivation of the negative electrode and the pore clogging on the surface of the separator are prevented, thereby enhancing battery capacity and life characteristic. Further, the electrolyte complex for a lithium-sulfur battery is a solid phase in which an organic electrolyte and inorganic particles having a high ion conductive gel type are homogeneously complexed. It can be advantageous to more effectively inhibit the migration of the solid polysulfide through smooth ion movement and inorganic particle complexation at the same time.

The first electrolyte 20 is coated on the surface of a positive electrode (material). The coating of the first electrolyte on the surface of a sulfur particle as a positive electrode facilitates dissolution of polysulfide and can maximize battery capacity. The first electrolyte 20 comprises an organic solvent having dielectric constant of 30 or more, a lithium salt, a crosslinkable monomer and an inorganic particle.

The organic solvent (having dielectric constant of 30 or more) organic solvent and the lithium salt are ingredients used for maximizing battery capacity. It is preferable to use sulfone-based organic solvent such as ethyl methyl sulfone and tetramethylene sulfone, nitrile-based organic solvent such as acetonitrile, carbonate-based organic solvent such as propylene carbonate and γ-butyrolactone as the organic solvent, and it is most preferable to use ethyl methyl sulfone having dielectric constant of 95. On the other hand, in the lithium-sulfur battery, the degree of dissolution of the polysulfide is determined by dielectric constant of an organic solvent. Accordingly, the organic solvent may have dielectric constant of 30 or more, preferably dielectric constant of 30 to 200.

The content of the organic solvent may vary depending on the type of the organic solvent or other components, and therefore, it is not easy to specify the content. For example, the content may be 20 wt% to 90 wt% based on the total weight of the first electrolyte. In this case, if the content of the organic solvent is less than 20 wt% based on the total weight of the first electrolyte, there may be a problem that ion conduction may not be smooth, and if the content is over 90 wt%, there may be a problem that the solid state cannot be maintained.

The lithium salt can be used without any particular limitation as long as it contains lithium metal, and it is dissolved in the organic solvent and moved in the form of ion. The lithium salt may be, for example, at least one selected from the group consisting of lithium bis(trifluoromethane sulfonyl)imide (LiTFSI), lithium bis(fluorosulfonyl)imide (LiFSI), lithium perchlorate (LiClO₄), lithium hexafluoroarsenate (LiAsF₆), lithium tetrafluoroborate (LiBF₄), lithium hexafluorophosphate (LiPF₆), lithium hexafluoroantimonate (LiSbF₆), lithium difluoromethane sulfonate (LiC₄F₉SO₃), lithium aluminate (LiAlO₂), lithium tetrachloroaluminate (LiAlCl₄), lithium chloride (LiCl), lithium iodide (LiI), lithium bis(oxalate)borate (LiB(C₂O₄)₂), lithium trifluoromethane sulfonyl imide (LiN(CₓF₂ₓ₊₁SO₂)(C_{y}F_{2y+1}SO₂), (wherein, x and y are natural number)), derivatives thereof and a mixture thereof.

The content of the lithium salt may vary depending on the type of the lithium salt or other components, and therefore, it is not easy to specify the content. For example, the content may be 1 wt% to 30 wt% based on the total weight of the first electrolyte. In this case, if the content of the lithium salt is less than 1 wt% based on the total weight of the first electrolyte, there may be a problem that ion conduction may not be smooth, and if the content is over 30 wt%, there may be a problem that the lithium salt is not dissolved.

The crosslinkable monomer is used for crosslinking a positive electrode and electrolyte by photopolymerization or thermal polymerization to form a polymer matrix, and it may be, for example, at least one selected from the group consisting of trimethylolpropane ethoxylate triacrylate, polyethylene glycol diacrylate, triethylene glycol diacrylate, trimethylolpropane ethoxylate triacrylate, bisphenol A ethoxylate dimethacrylate, derivatives thereof and a mixture thereof.

The content of the crosslinkable monomer may be 1 wt% to 40 wt%, preferably 5 wt% to 20 wt% based on the total weight of the first electrolyte. If the content of the crosslinkable monomer is less than 1 wt% based on the total weight of the first electrolyte, there may be a problem that the first electrolyte does not maintain the solid state due to insufficient crosslinking and flows, and if the content is over 40 wt%, as the proportion of polymer in the electrolyte complex increases, the ion conductivity is significantly lowered, and therefore, smooth ion conduction may be difficult.

The inorganic particles are an ingredient that is dispersed uniformly in the electrolyte complex and is used for securing the mechanical strength to maintain film condition without support (self-standing), and may be, for example, at least one selected from the group consisting of alumina (Al₂O₃), silicon dioxide (SiO₂), titanium dioxide (TiO₂), barium titanate (BaTiO₃), lithium oxide (Li₂O), lithium fluoride (LiF), lithium hydroxide (LiOH), lithium nitride (Li₃N), barium oxide (BaO), sodium oxide (Na₂O), lithium carbonate (Li₂CO₃), calcium carbonate (CaCO₃), lithium aluminate (LiAlO₂), strontium titanate (SrTiO₃), tin oxide (SnO₂), cerium oxide (CeO₂), magnesium oxide (MgO), nickel oxide (NiO) calcium oxide (CaO), zinc oxide (ZnO), zirconium dioxide (ZrO₂), silicon carbide (SiC), derivatives thereof and a mixture thereof.

The average particle size of the inorganic particles is not particularly limited, but it may preferably be 1,000 nm or less, and if the average particle size of the inorganic particles is excessively large, the particles may not be evenly dispersed in the organic electrolyte. On the other hand, since the finally produced electrolyte includes an organic solvent and the type of inorganic particles, which are solid, may vary depending on the type and size of the inorganic material, it is not easy to specify the content of the inorganic particles. However, for example, the inorganic particles can be included in an amount of 30 parts by weight to 90 parts by weight based on the first electrolyte 100 parts by weight.

On the other hand, the first electrolyte 20 may be, for example, applied to the surface of each of the sulfur particles, or only to the surface of the aggregate of the sulfur particles. Accordingly, the first electrolyte 20 does not have any particular limitation as to where it is applied if it allows the dissolution of the polysulfide from the positive electrode. Further, the thickness of the first electrolyte 20 is closely related to the ion transfer performance. Accordingly, the thickness may vary depending on the size of the positive electrode particles or the desired battery capacity, and the thickness is preferably 100 µm or less (that is, the thinner the better).

Then, the second electrolyte 40 is interposed between the first electrolyte 20 and the negative electrode 30. In other words, it is coated on the surface of the negative electrode 30 (facing the positive electrode) and is located corresponding to the first electrolyte 20. Due to the dielectric constant difference from the first electrolyte 20, the polysulfide migrating from the sulfur positive electrode can be prevented from reaching the negative electrode or the separator, thereby improving battery capacity and life characteristic.

The second electrolyte 40 comprises an organic solvent having dielectric constant of 20 or less, a lithium salt, a crosslinkable monomer and an inorganic particle. The organic solvent (having dielectric constant of 20 or less) is an ingredient used for preventing migration of polysulfide. It may be, for example, ether-based organic solvent such as tetraethylene glycol ether, triethylene glycol ether and diethylene glycol ether, tetrahydrofuran and dioxolane and it is most preferably to use tetraethylene glycol ether having dielectric constant of 7.7. On the other hand, the second electrolyte 40 may be coated to a thickness of 100 µm or less, and if it is more than 100 µm, it may be difficult to supply ions smoothly to the electrode because it becomes a resistance element of the ion transfer path.

In addition, description of definition, type and content of each of the lithium salt, the crosslinkable monomer and the inorganic particles contained in the second electrolyte 40 is based on the description of the lithium salt, the crosslinkable monomer and the inorganic particles contained in the first electrolyte 20 (However, the crosslinkable monomer contained in the second electrolyte is to form a polymer matrix by crosslinking the negative electrode and the electrolyte by photopolymerization).

Next, the electrochemical device including the electrolyte complex for a lithium-sulfur battery according to the present invention will be described. The electrochemical device comprising the electrolyte complex for a lithium-sulfur battery comprises the above-described electrolyte complex for a lithium-sulfur battery and an electrode facing the electrolyte complex. If necessary, the electrolyte complex and the electrode may be integrated, and in this case, the interfacial resistance between the electrolyte complex and the electrode may be further reduced.

Then, a method for preparing an electrochemical device including the electrolyte complex for a lithium-sulfur battery according to the present invention will be described. Fig. 2 is a mimetic diagram of a process for manufacturing the electrolyte complex according to one Example of the present invention. Referring to Fig. 1 and Fig. 2, the method for manufacturing an electrochemical device, preferably a lithium-sulfur battery comprises the following steps of (a) dissolving a lithium salt in an organic solvent having dielectric constant of 30 or more to prepare the first electrolyte solution, and then sequentially adding a crosslinkable monomer and an inorganic particle to the first electrolyte solution followed by stirring and dispersing thereof to prepare the first electrolyte paste; (b) dissolving a lithium salt in an organic solvent having dielectric constant of 20 or less to prepare the second electrolyte solution, and then sequentially adding a crosslinkable monomer and an inorganic particle to the second electrolyte solution followed by stirring and dispersing thereof to prepare the second electrolyte paste; (c) coating the first electrolyte paste on the surface of a positive electrode followed by polymerizing thereof to form the first electrolyte in a solid phase; (d) coating the second electrolyte paste on the surface of the first electrolyte thus formed followed by polymerizing thereof to form the second electrolyte in a solid phase; and (e) attaching a negative electrode on the second electrolyte.

In the step (a), there is not particular limitation on the content of the organic solvent and the lithium salt, and the content of the crosslinkable monomer may be 1 part by weight to 50 parts by weight, preferably 5 parts by weight to 30 parts by weight based on the first electrolyte solution 100 parts by weight. The content of the inorganic particles may vary depending on the type and size of the inorganic particles without a particular limitation, but when using alumina with a particle size of 300 nm, the content of the inorganic particles may be 100 parts by weight to 200 parts by weight based on 100 parts by weight of the total content of the organic solvent, the lithium salt and the crosslinkable monomer.

Further, in the step (a), the process of supplying the crosslinkable monomer to the electrolyte solution is not particularly limited as long as the electrolyte solution and the crosslinkable monomer can be well mixed, but the process can be performed at a room temperature for 5 min to 30 min. The subsequent process of supplying and dispersing the inorganic particles is not particularly limited as long as the inorganic particles can be well dispersed, but the process can be performed by ball-milling, vortexing or planetary mixing method for 2 min to 30 min.

In the step (b), the content of the organic solvent and the lithium salt is not particularly limited, and the content of the crosslinkable monomer is 1 part by weight to 50 parts by weight, preferably 5 parts by weight to 30 parts by weight based on 100 parts by weight of the second electrolyte solution containing the organic solvent and the lithium salt. The content of the inorganic particles may vary depending on the type and size of the inorganic particles without a particular limitation, but when using alumina with a particle size of 300 nm, the content of the inorganic particles may be 100 parts by weight to 200 parts by weight based on 100 parts by weight of the total content of the organic solvent, the lithium salt and the crosslinkable monomer.

Further, in the step (b), the process of supplying the crosslinkable monomer to the electrolyte solution is not particularly limited as long as the electrolyte solution and the crosslinkable monomer can be well mixed, but the process can be performed at a room temperature for 5 min to 30 min. The subsequent process of supplying and dispersing the inorganic particles is not particularly limited as long as the inorganic particles can be well dispersed, but the process can be performed by ball-milling, vortexing or planetary mixing method for 2 min to 30 min.

In addition, description of definition and type of each of the compounds used in the steps (a) and (b) is based on the contents described in the section of electrolyte complex for a lithium-sulfur battery. On the other hand, in the above manufacturing method, it is described that the first electrolyte paste is prepared first and then the second electrolyte paste is prepared. However, this is for convenience of description, and there is no particular limitation on the order.

In the steps (c) and (d), the method for applying the first electrolyte paste and the second electrolyte paste is not particularly limited as long as it is a method capable of uniform application, but for example, it may be a doctor blade method. Further, the amount of the first electrolyte paste and the second electrolyte paste applied may vary depending on the lithium-sulfur battery capacity without limitation, and it is preferable to apply the paste to a thickness of 100 µm or less.

On the other hand, the first electrolyte paste may be, for example, applied to the surface of each of the sulfur particles, or only to the surface of the aggregate of the sulfur particles. Accordingly, the first electrolyte paste does not have any particular limitation as to where it is applied if it allows the dissolution of the polysulfide from the positive electrode. In addition, the polymerization (reaction) in the steps (c) and (d) is a process for curing the coated first electrolyte paste and the second electrolyte paste, and can be performed by irradiating a conventional photopolymerization light source such as UV, halogen and LED for 10 sec to 600 sec. Further, the polymerization may be, for example, photopolymerization (photo-crosslinking) and thermal polymerization (heat-crosslinking), but not particularly limited thereto. On the other hand, a thickness of the first electrolyte may be 100 µm or less for a smooth ion conduction role.

On the other hand, the present invention also can provide a battery module comprising an electrochemical device (lithium-sulfur battery) as a unit cell and a battery pack comprising the same. The battery module or battery pack can be used as a power supply of at least one medium to large device of Power tool; electric car such as Electric vehicle (EV), Hybrid electric vehicle and Plug-in hybrid electric vehicle (PHEV); and power storage system.

Hereinafter, descriptions of the positive electrode, the negative electrode and the separator applied to the electrochemical device (lithium-sulfur battery) comprising the electrolyte complex according to the present invention will be added.

### Positive electrode

The positive electrode used in the present invention will be described. After preparing a positive electrode composition comprising a positive electrode active material, a conductive material and a binder, the composition is diluted in a predetermined solvent (dispersion medium) to prepare slurry, and then the slurry was directly coated on a positive electrode current collector and dried to form a positive electrode layer. Or, after the slurry is casted on a separate support, a film obtained by peeling off from the support is laminated on the positive electrode current collector to prepare a positive electrode layer. In addition, a positive electrode can be prepared in a variety of ways using methods well known to those skilled in the art.

The conductive material acts as a path through which electrons move from the positive electrode current collector to the positive electrode active material, thereby providing electron conductivity, and electrically connecting the electrolyte and the positive electrode active material. Thus, the conductive material also acts as a path for the lithium ion (Li+) in the electrolyte to migrate to and react with the sulfur at the same time. Accordingly, if the amount of the conductive material is not sufficient or its role is not properly performed, the non-reacting portion of the sulfur in the electrode is increased and eventually the capacity is reduced. Further, the high rate discharge characteristic and the charge/discharge cycle life are adversely affected, so that it is necessary to add an appropriate conductive material. Preferably, the content of the conductive material may be appropriately added in the range of 0.01 wt% to 30 wt% based on the total weight of the positive electrode composition.

The conductive material is not particularly limited as long as it has conductivity without causing a chemical change in a battery. For example, it may be graphite; carbon blacks such as Denka black, acetylene black, Ketjen black, channel black, furnace black, lamp black and thermal black; conductive fibers such as carbon fibers and metallic fibers; metallic powders such as carbon fluoride powder, aluminum powder and nickel powder; conductive whiskers such as zinc oxide and potassium titanate; conductive metal oxides such as titanium oxide; and conductive materials such as polyphenylene derivatives. Specific examples of commercially available conductive materials include various acetylene black products (available from Chevron Chemical company) or Denka black (available from Denka Singapore Private Limited), products available from Gulf Oil company, Ketjen Black, EC series products (available from Armak company), Vulcan XC-72 (available from Cabot company) and Super P (available from Timcal company.

The binder is used to provide the positive electrode active material with adhesion to the current collector. The binder must be well dissolved in a solvent, must well construct the conductive network between the positive electrode active material and the conductive material, and also have adequate impregnation of the electrolyte. The binder may be any binder known in the art. Specifically, the binder may be at least one selected from the group consisting of fluorine resin-based binder such as polyvinylidene fluoride (PVdF) and polytetrafluoroethylene (PTFE); rubber-based binder such as styrene-butadiene rubber, acrylonitrile-butadiene rubber and styrene-isoprene rubber; cellulosebased binder such as carboxymethylcellulose (CMC), starch, hydroxypropyl cellulose and regenerated cellulose; polyalcohol-based binder; polyolefin-based binder such as polyethylene and polypropylene; polyimide-based binder; polyester-based binder; and silane-based binders; or a mixture or copolymer thereof, but not limited thereto.

The content of the binder may be 0.5 wt% to 30 wt% based on the total weight of the positive electrode composition, but not limited thereto. If the content of the binder resin is less than 0.5 wt%, physical properties of the positive electrode may be deteriorated and the positive electrode active material and the conductive material may be separated, and if the content is over 30 wt%, the ratio of the active material to the conductive material in the positive electrode may be relatively reduced and the battery capacity may be reduced, and it may act as a resistance element, thereby deteriorating efficiency.

The positive electrode composition including the positive electrode active material, the conductive material and the binder may be diluted in a predetermined solvent and coated on the positive electrode current collector using a conventional method known in the art. First, the positive electrode current collector is prepared. The positive electrode current collector generally has a thickness of 3 µm to 500 µm. Any positive electrode current collector may be used as long as it does not cause any chemical change in a battery and has high conductivity. For example, stainless steel, aluminum, nickel, titanium, sintered carbon, or aluminum or stainless steel whose surface is treated with carbon, nickel, titanium or silver is used. The current collector may have fine surface irregularities to increase adhesion of the positive electrode active material, and may have various shapes, such as film, sheet, foil, net, porous body, foam or nonwoven body.

Next, the positive electrode composition comprising the positive electrode active material, the conductive material and the binder is coated on the positive electrode current collector. The positive electrode composition comprising the positive electrode active material, the conductive material and the binder is mixed in a predetermined solvent to prepare slurry. At this time, the solvent should be easy to dry and can dissolve the binder well, but keep the positive electrode active material and the conductive material in a dispersed state without dissolving, most preferably. When the solvent dissolves the positive electrode active material, because the specific gravity of the sulfur in the slurry is high (D = 2.07), the sulfur is submerged in the slurry and then the sulfur is driven to the current collector during coating. Thus, there is a tendency that there is a problem on the conductive network, thereby causing a problem on the battery operation. The solvent (dispersion medium) may be water or organic solvent, and the organic solvent may be at least one selected from the group consisting of dimethyl formamide, isopropyl alcohol, acetonitrile, methanol, ethanol and tetrahydrofuran.

Next, there is no particular limitation on the method of coating the positive electrode composition in the form of slurry. For example, the slurry may be coated by the following methods: Doctor blade coating, Dip coating, Gravure coating, Slit die coating, Spin coating, Comma coating, Bar coating, Reverse roll coating, Screen coating, Cap coating and the like. In the positive electrode composition after such a coating process, the evaporation of the solvent (dispersion medium), the denseness of the coating film, and the adhesion between the coating film and the current collector are achieved through a drying process. At this time, the drying is carried out according to a conventional method, and not particularly limited.

### Negative electrode

The negative electrode may be any material which can absorb or release lithium ion, and for example, it may be metallic materials such as lithium metal and lithium alloy and carbonaceous materials such as low-crystalline carbon and high-crystalline carbon. Examples of the low-crystalline carbon may include soft carbon and hard carbon, and examples of the high-crystalline carbon may include natural graphite, Kish graphite, pyrolytic carbon, mesophase pitch-based carbon fibers, meso-carbon microbeads, mesophase pitches, and high-temperature calcined carbon such as petroleum or coal tar pitch-derived cokes. In addition, alloys containing silicon or oxides such as Li₄Ti₅O₁₂ are also well known negative electrode.

At this time, the negative electrode may include a binder, and it may be various binder polymers such as polyvinylidenefluoride (PVDF), polyvinylidenefluoridehexafluoropropylene copolymer (PVDF-co-HFP), polyacrylonitrile, polymethylmethacrylate and styrene-butadiene rubber (SBR).

The negative electrode may further selectively comprise a negative electrode current collector for supporting the negative electrode activation layer comprising the negative electrode active material and the binder. Specifically, the negative electrode current collector may be selected from the group consisting of copper, stainless steel, titanium, silver, palladium, nickel, alloys thereof and a combination thereof. The surface of the stainless steel can be treated with carbon, nickel, titanium or silver, and the alloy may be aluminum-cadmium alloy. In addition, calcined carbon, non-conductive polymer surface treated with a conductive material, or a conductive polymer may be used.

The binder plays a role in paste formation of the active material, adhesion between the active materials, adhesion with the current collector, and a buffering effect on expansion and contraction of the active material, and the like. Specifically, the binder is the same as described above for the binder of the positive electrode. Further, the negative electrode may be a lithium metal or a lithium alloy. As a non-limiting example, the negative electrode may be a thin film of a lithium metal, or an alloy of lithium and at least one metal selected from the group consisting of Na, K, Rb, Cs, Fr, Be, Mg, Ca, Sr, Ba, Ra, Al and Sn.

### Separator

A common separator can be interposed between the positive electrode and the negative electrode. The separator is a physical separator having a function of physically separating and electrode. Any separator may be used without limitation as long as it is used as a common separator, and particularly, it is preferable to have a low resistance to the ion movement of the electrolyte and an excellent electrolyte impregnating ability. Further, the separator allows lithium ions to be transported between the positive electrode and the negative electrode while isolating or insulating the positive electrode and the negative electrode from each other. Such separator may be made of a porous and non-conductive or insulating material. The separator may be an independent member such as a film, or a coating layer added to at least one of the positive electrode and the negative electrode. Specifically, it may be a porous polymer film prepared from a polyolefin-based polymer such as ethylene homopolymer, propylene homopolymer, ethylene-butene copolymer, ethylene-hexene copolymer and ethylene-methacrylate copolymer, in a single layer or laminate form. Alternatively, the separator may be a commonly used porous nonwoven fabric such as a nonwoven fabric made of high-melting point glass fiber, polyethylene terephthalate fiber, etc., but is not limited thereto.

Hereinafter, the present invention will be described in more detail with reference to the following preferred examples. However, these examples are provided for illustrative purposes only.

### [Example 1] Preparation of electrolyte complex

1 mole lithium bismide (LiTFSI) was dissolved in ehtylmethyl sulfone having dielectric constant of 95 to prepare the first electrolyte solution. Trimethylolpropane ethoxylate triacrylate (crosslinkable monomer) was supplied thereto and stirred at a room temperature for 20 min. Then, alumina (inorganic particle) having average particle size of 300 nm was supplied thereto and dispersed by ball-milling (THINKY SUPER MIXER, ARE-310, THINKY CORPORATION, JAPAN) for 10 min to prepare the first electrolyte paste. At this time, weight ratio of first electrolyte solution : crosslinkable monomer was 85 : 15, and weight ratio of (first electrolyte solution + crosslinkable monomer) : inorganic particle was 1 : 1.5.

Next, tetraethylene glycol ether having dielectric constant of 7.7 and lithium bismide (LiTFSI) were mixed at a molar ratio of 1 : 1, and then lithium bismide was dissolved in the resulting solvent to prepare the second electrolyte solution. Trimethylolpropane ethoxylate triacrylate (crosslinkable monomer) was supplied thereto and stirred at a room temperature for 20 min. Then, alumina (inorganic particle) having average particle size of 300 nm was supplied thereto and dispersed by ball-milling for 10 min to prepare the second electrolyte paste. At this time, weight ratio of second electrolyte solution : crosslinkable monomer was 85 : 15, and weight ratio of (second electrolyte solution + crosslinkable monomer) : inorganic particle was 1 : 1.5.

Then, after coating the first electrolyte paste on the prepared sulfur positive electrode, UV light was irradiated thereto for 30 sec to form the 50 µm-thick film type first electrolyte. Then, after coating the second electrolyte paste on the first electrolyte, UV light was irradiated thereto for 30 sec to form the 50 µm-thick film type second electrolyte. Accordingly, a solid phase electrolyte complex with a layered structure was prepared.

### [Example 2] Preparation of electrolyte complex

5 mole lithium bismide was dissolved in propylene carbonate having dielectric constant of 64.97 to prepare the first electrolyte solution. Trimethylolpropane ethoxylate triacrylate (crosslinkable monomer) was supplied thereto and stirred at a room temperature for 20 min. Then, alumina (inorganic particle) having average particle size of 300 nm was supplied thereto and dispersed by ball-milling (THINKY SUPER MIXER, ARE-310, THINKY CORPORATION, JAPAN) for 10 min to prepare the first electrolyte paste. At this time, weight ratio of first electrolyte solution : crosslinkable monomer was 85 : 15, and weight ratio of (first electrolyte solution + crosslinkable monomer) : inorganic particle was 1 : 1.5.

Next, dioxolane having dielectric constant of 7.0 and lithium bismide were mixed at a molar ratio of 1 : 1, and then lithium bismide was dissolved in the resulting solvent to prepare the second electrolyte solution. Trimethylolpropane ethoxylate triacrylate (crosslinkable monomer) was supplied thereto and stirred at a room temperature for 20 min. Then, alumina (inorganic particle) having average particle size of 300 nm was supplied thereto and dispersed by ball-milling for 10 min to prepare the second electrolyte paste. At this time, weight ratio of second electrolyte solution : crosslinkable monomer was 85 : 15, and weight ratio of (second electrolyte solution + crosslinkable monomer) : inorganic particle was 1 : 1.5.

Then, after coating the first electrolyte paste on the prepared sulfur positive electrode, UV light was irradiated thereto for 30 sec to form the 50 µm-thick film type first electrolyte. Then, after coating the second electrolyte paste on the first electrolyte, UV light was irradiated thereto for 30 sec to form the 50 µm-thick film type second electrolyte. Accordingly, a solid phase electrolyte complex with a layered structure was prepared.

### [Comparative Example 1] Preparation of electrolyte having single layer structure

After preparing an electrolyte solution by dissolving 1 mole lithium bismide in ehtylmethyl sulfone, the solution was supplied between the sulfur positive electrode and the lithium negative electrode, and then UV light was irradiated thereto for 30 sec to prepare electrolyte having a single layer structure.

### [Comparative Example 2] Preparation of electrolyte having single layer structure

After mixing tetraethylene glycol ether and lithium bismide at a molar ratio of 1 : 1, lithium bismide was dissolved in the resulting solvent to prepare an electrolyte solution. Then, the solution was supplied between the sulfur positive electrode and the lithium negative electrode, and then UV light was irradiated thereto for 30 sec to prepare electrolyte having a single layer structure.

### [Comparative Example 3] Preparation of electrolyte complex laminated with single layer structures

After preparing an electrolyte having a single layer structure according to Comparative Example 1 and Comparative Example 2, respectively, the two electrolytes were simply overlaid to prepare an electrolyte complex.

### [Examples 1 and 2, Comparative Example 1 and 3] Preparation of lithium-sulfur battery

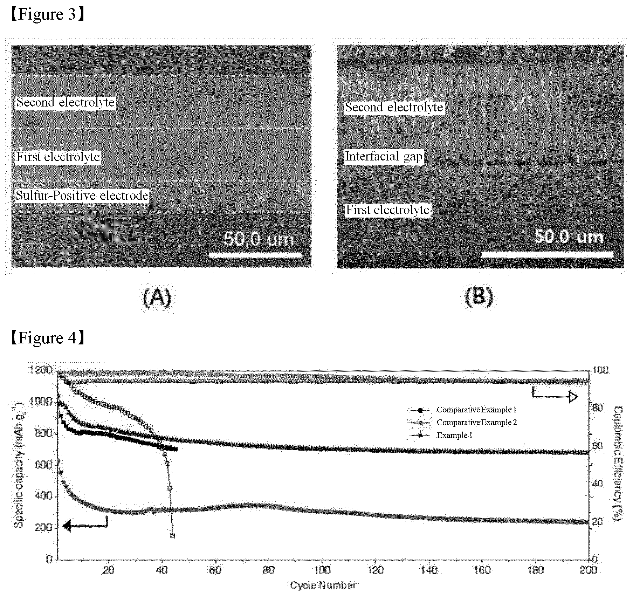

A lithium metal (negative electrode) was attached on the second electrolyte in the electrolyte complexes prepared in Examples 1 and 2, and a separator was installed between the first electrolyte and the second electrolyte to prepare a coin-shaped lithium-sulfur battery (Coin cell) including electrolyte complexes was prepared. Further, a separator was installed on each electrolyte prepared in Comparative Examples 1 to 3 to prepare a coin-shaped lithium-sulfur battery (Coin cell). On the other hand, Fig. 3 is an image (A) of the integrated an electrolyte complex and an electrode according to one Example of the present invention observed with scanning electron microscope (SEM), and an image (B) of the simply laminated electrolyte complex according to Comparative Example observed by scanning electron microscope. Fig. 3(A) corresponds to Example 1 and Fig. 3(B) corresponds to Comparative Example 3.

### [Test Example 1] Evaluation of lithium-sulfur battery capacity and life characteristic

The charging and discharging characteristics of the lithium-sulfur batteries prepared in Example 1, Comparative Examples 1 and 2 were observed after setting the charging/discharging current rate to 0.2 C / 0.2 C. Fig. 4 is a graph comparing capacity and life characteristic of the lithium-sulfur batteries according to one Example of the present invention and Comparative Examples. In the case of Comparative Example 1 using the electrolyte containing a sulfone-based organic solvent, as illustrated in Fig. 4, it was confirmed that high battery capacity can be realized due to excellent sulfur dissolution characteristic, but the transfer of polysulfide (shuttle phenomenon) causes deactivation of the surface of the lithium negative electrode and clogging of the separator pore structure, and therefore, the cycle life characteristic becomes very short. Further, in the case of Comparative Example 2 using the electrolyte containing a glyme-based organic solvent, it was found that battery capacity is low due to bad sulfur dissolution characteristic, but cycle characteristic is excellent due to prevention of the polysulfide transfer.

On the contrary, in the case of Example 1 using an electrolyte complex, due to the first electrolyte formed on the sulfur positive electrode to facilitate dissolution of polysulfide and the second electrolyte form on the lithium negative electrode to prevent dissolution and migration of polysulfide, unlike Comparative Examples 1 and 2, it was possible to simultaneously realize high capacity and excellent cycle life characteristic of the battery. On the other hand, the battery prepared in Example 2 also showed similar results to Example 1.

### [Test Example 2] Evaluation of surface of positive electrode and negative electrode of lithium-sulfur battery

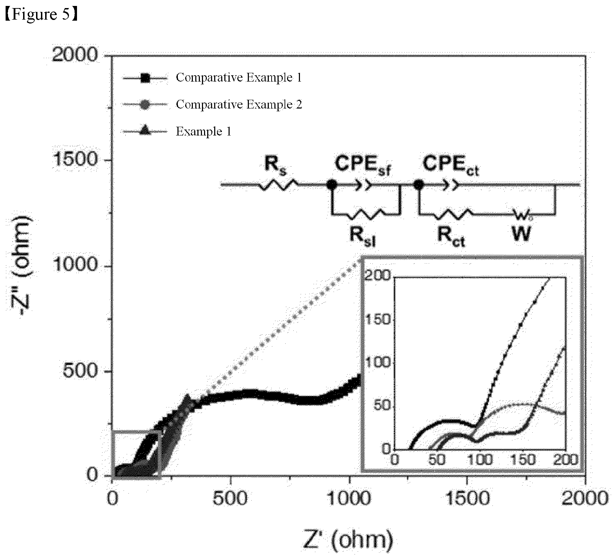

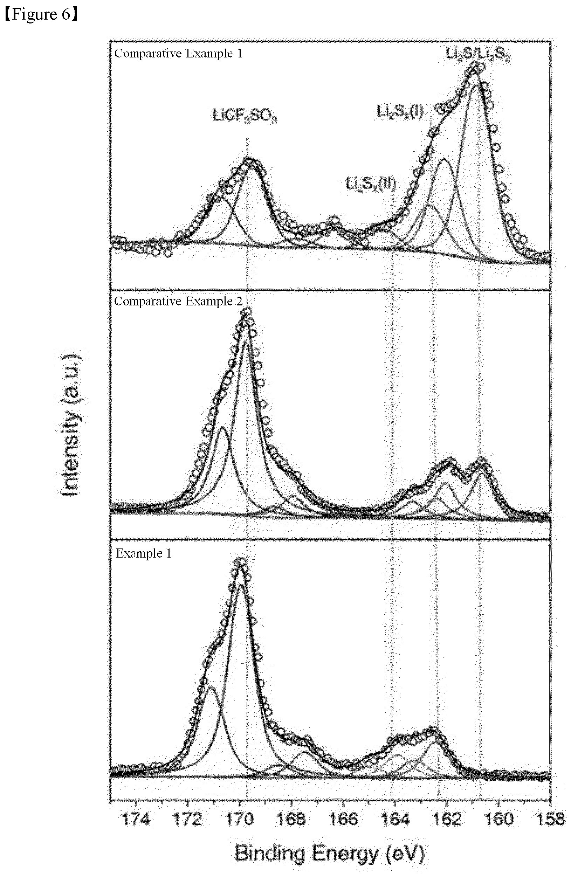

The charging and discharging characteristics of the lithium-sulfur batteries prepared in Example 1, Comparative Examples 1 and 2 were observed after setting the charging/discharging current rate to 0.2 C / 0.2 C as described in Test Example 1, and then the resistance of the surface of the sulfur positive electrode and the amount of polysulfide present on the surface of the lithium negative electrode were observed. Fig. 5 is a graph showing the surface resistance value of the positive electrodes of the lithium-sulfur batteries according to one Example of the present invention and Comparative Examples, and Fig. 6 is a graph showing the result of XPS analysis of the surface of the negative electrodes of the lithium-sulfur batteries according to one Example of the present invention and Comparative Examples.

First, as a result of analyzing the charging/discharging life characteristic of each battery for 200 cycles and then analyzing the surface of the sulfur positive electrode through impedance, as illustrated in Fig. 5, it was confirmed that the surface resistance of Example 1 was small, compared with Comparative Examples 1 and 2, due to the prevention of the polysulfide transfer (shuttle phenomenon). Further, as a result of analyzing the charging/discharging life characteristic of each battery for 200 cycles and then analyzing the surface of the lithium negative electrode by XPS, as illustrated in Fig. 6, due to the prevention of the polysulfide transfer, solid phase polysulfide (Li₂S₂, Li₂S) was not observed on the surface of the negative electrode of Example 1. From the above results, it can be found that battery capacity and life characteristic are remarkably improved by using the electrolyte complex for a lithium-sulfur battery according to the present invention. On the other hand, the battery prepared in Example 2 also showed similar results to Example 1.

### [Test Example 3] Evaluation of ion conductivity of lithium-sulfur battery

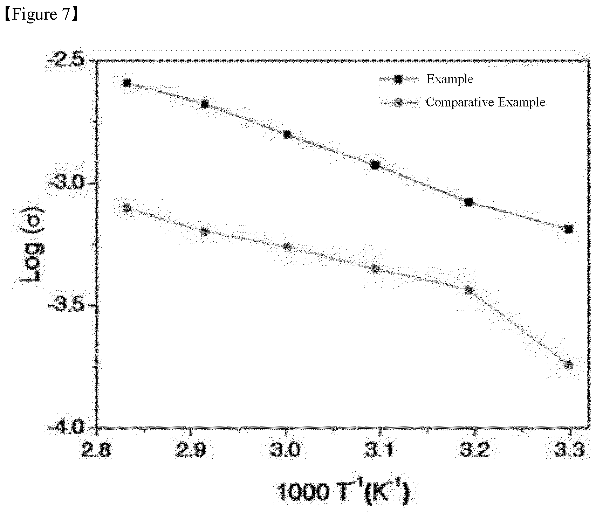

Fig. 7 is a graph comparing ion conductivity of the lithium-sulfur batteries according to one Example of the present invention (Example 1) and Comparative Example (Comparative Example 3). As a result of testing ion conductivity of the lithium-sulfur batteries prepared in Example 1 and Comparative Example 3, as illustrated in Fig. 7, it was confirmed that the ion conductivity of Example 1 was superior to that of Comparative Example 3. This is because in the electrolyte complex of Example 1, the second electrolyte was directly coated on the first electrolyte, whereas in Comparative Example 3, electrolytes having a single layer were simply laminated. Thus, it can be found that in the case of Comparative Example 3, the interfacial resistance between the two electrolytes was large due to the gap formed between the electrolytes, but in the case of Example 1 in which the gap was not formed or minimized, the ion conductivity was excellent due to the small interfacial resistance between the two electrolytes.

## Claims

1. An electrolyte complex for a lithium-sulfur battery, the electrolyte complex comprising two kinds of phase-separated solid electrolytes in the form of a layered structure, these being a first solid electrolyte capable of being positioned to the positive electrode side and a second solid electrolyte capable of being positioned to the negative electrode side;
wherein the first solid electrolyte comprises an organic solvent having a dielectric constant of 30 or more, a lithium salt, a polymer formed by polymerization of a crosslinkable monomer, and an inorganic particle; and
wherein the second solid electrolyte comprises an organic solvent having a dielectric constant of 20 or less, a lithium salt, a polymer formed by polymerization of a crosslinkable monomer, and an inorganic particle.

2. The electrolyte complex of Claim 1, wherein the organic solvent having a dielectric constant of 30 or more is selected from a sulfone-based organic solvent, a nitrile-based organic solvent, a carbonate-based organic solvent, and gamma-butyrolactone.

3. The electrolyte complex of Claim 1, wherein the lithium salt contained in the first solid electrolyte is at least one of lithium bis(trifluoromethane sulfonyl)imide, lithium bis(fluorosulfonyl)imide, lithium perchlorate, lithium hexafluoroarsenate, lithium tetrafluoroborate, lithium hexafluorophosphate, lithium hexafluoroantimonate, lithium difluoromethane sulfonate, lithium aluminate, lithium tetrachloroaluminate, lithium chloride, lithium iodide, lithium bis(oxalate)borate, and lithium trifluoromethane sulfonyl imide.

4. The electrolyte complex of Claim 1, wherein the crosslinkable monomer from which the polymer contained in the first solid electrolyte is produced is at least one of trimethylolpropane ethoxylate triacrylate, polyethylene glycol diacrylate, triethylene glycol diacrylate, and bisphenol A ethoxylate dimethacrylate.

5. The electrolyte complex of Claim 1, wherein the inorganic particle contained in the first solid electrolyte is at least one of alumina (Al₂O₃), silicon dioxide (SiO₂), titanium dioxide (TiO₂), barium titanate (BaTiO₃), lithium oxide (Li₂O), lithium fluoride (LiF), lithium hydroxide (LiOH), lithium nitride (Li₃N), barium oxide (BaO), sodium oxide (Na₂O), lithium carbonate (Li₂CO₃), calcium carbonate (CaCO₃), lithium aluminate (LiAlO₂), strontium titanate (SrTiO₃), tin oxide (SnO₂), cerium oxide (CeO₂), magnesium oxide (MgO), nickel oxide (NiO) calcium oxide (CaO), zinc oxide (ZnO), zirconium dioxide (ZrOz), and silicon carbide (SiC).

6. The electrolyte complex of Claim 1, wherein the thickness of the first solid electrolyte is 100 µm or less.

7. The electrolyte complex of Claim 1, wherein the organic solvent having a dielectric constant of 20 or less is selected from an ether-based organic solvent, tetrahydrofuran, and dioxolane.

8. The electrolyte complex of Claim 1, wherein the lithium salt contained in the second solid electrolyte is at least one of lithium bis(trifluoromethane sulfonyl)imide, lithium bis(fluorosulfonyl)imide, lithium perchlorate, lithium hexafluoroarsenate, lithium tetrafluoroborate, lithium hexafluorophosphate, lithium hexafluoroantimonate, lithium difluoromethane sulfonate, lithium aluminate, lithium tetrachloroaluminate, lithium chloride, lithium iodide, lithium bis(oxalate)borate, and lithium trifluoromethane sulfonyl imide.

9. The electrolyte complex of Claim 1, wherein the crosslinkable monomer from which the polymer contained in the second solid electrolyte is produced is at least one of trimethylolpropane ethoxylate triacrylate, polyethylene glycol diacrylate, triethylene glycol diacrylate, and bisphenol A ethoxylate dimethacrylate.

10. The electrolyte complex of Claim 1, wherein the inorganic particle contained in the second solid electrolyte is at least one of alumina (Al₂O₃), silicon dioxide (SiO₂), titanium dioxide (TiO₂), barium titanate (BaTiO₃), lithium oxide (Li₂O), lithium fluoride (LiF), lithium hydroxide (LiOH), lithium nitride (Li₃N), barium oxide (BaO), sodium oxide (Na₂O), lithium carbonate (Li₂CO₃), calcium carbonate (CaCO₃), lithium aluminate (LiAlO₂), strontium titanate (SrTiO₃), tin oxide (SnO₂), cerium oxide (CeO₂), magnesium oxide (MgO), nickel oxide (NiO) calcium oxide (CaO), zinc oxide (ZnO), zirconium dioxide (ZrOz), and silicon carbide (SiC).

11. The electrolyte complex of Claim 1, wherein the thickness of the second solid electrolyte is 100 µm or less.

12. An electrochemical device comprising the electrolyte complex of Claim 1 and an electrode facing the electrolyte complex.

13. A method for preparing an electrochemical device including an electrolyte complex, which comprises the following steps of:
(a) dissolving a lithium salt in an organic solvent having a dielectric constant of 30 or more to prepare a first electrolyte solution, and then sequentially adding a crosslinkable monomer and an inorganic particle to the first electrolyte solution followed by stirring and dispersion thereof to prepare a first electrolyte paste;
(b) dissolving a lithium salt in an organic solvent having a dielectric constant of 20 or less to prepare a second electrolyte solution, and then sequentially adding a crosslinkable monomer and an inorganic particle to the second electrolyte solution followed by stirring and dispersion thereof to prepare a second electrolyte paste;
(c) coating the first electrolyte paste on the surface of a positive electrode, followed by polymerization thereof to form a first electrolyte in a solid phase;
(d) coating the second electrolyte paste on the surface of the first electrolyte thus formed, followed by polymerization thereof to form a second electrolyte in a solid phase; and
(e) attaching a negative electrode on the second electrolyte.

## Patentansprüche

1. Elektrolytkomplex für eine Lithium-Schwefel-Batterie, wobei der Elektrolytkomplex zwei Arten von phasengetrennten Festelektrolyten in Form einer geschichtete Struktur umfasst, wobei diese ein erster Festelektrolyt sind, der auf der Seite der positiven Elektrode angeordnet werden kann, und ein zweiter Festelektrolyt, der auf der Seite der negativen Elektrode angeordnet werden kann;
worin der erste Festelektrolyt ein organisches Lösungsmittel mit einer Dielektrizitätskonstante von 30 oder mehr, ein Lithiumsalz, ein Polymer, gebildet durch Polymerisation eines quervernetzbaren Monomers, und einen anorganischen Partikel umfasst; und
worin der zweite Festelektrolyt ein organisches Lösungsmittel mit einer Dielektrizitätskonstante von 20 oder weniger, ein Lithiumsalz, ein Polymer, gebildet durch Polymerisation eines quervernetzbaren Monomers, und einen anorganischen Partikel umfasst.

2. Elektrolytkomplex gemäß Anspruch 1, worin das organische Lösungsmittel mit einer Dielektrizitätskonstante von 30 oder mehr ausgewählt ist aus einem sulfonbasierten organischen Lösungsmittel, einem nitrilbasierten organischen Lösungsmittel, einem carbonatbasierten organischen Lösungsmittel und gamma-Butyrolacton.

3. Elektrolytkomplex gemäß Anspruch 1, worin das in dem ersten Festelektrolyten enthaltene Lithiumsalz mindestens eines aus Lithiumbis(trifluormethansulfonyl)imid, Lithiumbis(fluorsulfonyl)imid, Lithiumperchlorat, Lithiumhexafluoroarsenat, Lithiumtetrafluoroborat, Lithiumhexafluorophosphat, Lithiumhexafluorantimonat, Lithiumdifluormethansulfonat, Lithiumaluminat, Lithiumtetrachloraluminat, Lithiumchlorid, Lithiumiodid, Lithiumbis(oxalat)borat und Lithiumtrifluormethansulfonylimid ist.

4. Elektrolytkomplex gemäß Anspruch 1, worin das quervernetzbare Monomer, aus dem das in dem ersten Festelektrolyten enthaltene Polymer hergestellt ist, mindestens eines aus Trimethylolpropanethoxylattriacrylat, Polyethylenglykoldiacrylat, Triethylenglykoldiacrylat und Bisphenol-A-Ethoxylatdimethacrylat ist.

5. Elektrolytkomplex gemäß Anspruch 1, worin der im ersten Festelektrolyten enthaltene anorganische Partikel mindestens einer aus Aluminiumoxid (Al₂O₃), Siliziumdioxid (SiO₂), Titandioxid (TiO₂), Bariumtitanat (BaTiO₃), Lithiumoxid (Li₂O), Lithiumfluorid (LiF), Lithiumhydroxid (LiOH), Lithiumnitrid (Li₃N), Bariumoxid (BaO), Natriumoxid (Na₂O), Lithiumcarbonat (Li₂CO₃), Calciumcarbonat (CaCO₃), Lithiumaluminat (LiAlO₂), Strontiumtitanat (SrTiO₃), Zinnoxid (SnO₂), Ceroxid (CeO₂), Magnesiumoxid (MgO), Nickeloxid (NiO), Calciumoxid (CaO), Zinkoxid (ZnO), Zirkoniumdioxid (ZrO₂) und Siliciumcarbid (SiC) ist.

6. Elektrolytkomplex gemäß Anspruch 1, worin die Dicke des ersten Festelektrolyten 100 µm oder weniger beträgt.

7. Elektrolytkomplex gemäß Anspruch 1, worin das organische Lösungsmittel mit einer Dielektrizitätskonstante von 20 oder weniger ausgewählt ist aus einem etherbasierten organischen Lösungsmittel, Tetrahydrofuran und Dioxolan.

8. Elektrolytkomplex gemäß Anspruch 1, worin das in dem zweiten Festelektrolyten enthaltene Lithiumsalz mindestens eines aus Lithiumbis(trifluormethansulfonyl)imid, Lithiumbis(fluorsulfonyl)imid, Lithiumperchlorat, Lithiumhexafluoroarsenat, Lithiumtetrafluoroborat, Lithiumhexafluorophosphat, Lithiumhexafluorantimonat, Lithiumdifluormethansulfonat, Lithiumaluminat, Lithiumtetrachloraluminat, Lithiumchlorid, Lithiumiodid, Lithiumbis(oxalat)borat und Lithiumtrifluormethansulfonylimid ist.

9. Elektrolytkomplex gemäß Anspruch 1, worin das quervernetzbare Monomer, aus dem das in dem zweiten Festelektrolyten enthaltene Polymer hergestellt ist, mindestens eines aus Trimethylolpropanethoxylattriacrylat, Polyethylenglykoldiacrylat, Triethylenglykoldiacrylat und Bisphenol-A-Ethoxylatdimethacrylat ist.

10. Elektrolytkomplex gemäß Anspruch 1, worin der im zweiten Festelektrolyten enthaltene anorganische Partikel mindestens einer aus Aluminiumoxid (Al₂O₃), Siliziumdioxid (SiO₂), Titandioxid (TiO₂), Bariumtitanat (BaTiO₃), Lithiumoxid (Li₂O), Lithiumfluorid (LiF), Lithiumhydroxid (LiOH), Lithiumnitrid (Li₃N), Bariumoxid (BaO), Natriumoxid (Na₂O), Lithiumcarbonat (Li₂CO₃), Calciumcarbonat (CaCO₃), Lithiumaluminat (LiAlO₂), Strontiumtitanat (SrTiO₃), Zinnoxid (SnO₂), Ceroxid (CeO₂), Magnesiumoxid (MgO), Nickeloxid (NiO), Calciumoxid (CaO), Zinkoxid (ZnO), Zirkoniumdioxid (ZrO₂) und Siliciumcarbid (SiC) ist.

11. Elektrolytkomplex gemäß Anspruch 1, worin die Dicke des zweiten Festelektrolyten 100 µm oder weniger beträgt.

12. Elektrochemische Vorrichtung, umfassend den Elektrolytkomplex gemäß Anspruch 1 und eine dem Elektrolytkomplex zugewandte Elektrode.

13. Verfahren zur Herstellung einer elektrochemischen Vorrichtung, enthaltend einen Elektrolytkomplex, welches die folgenden Schritte umfasst:
(a) Lösen eines Lithiumsalzes in einem organischen Lösungsmittel mit einer Dielektrizitätskonstante von 30 oder mehr, um eine erste Elektrolytlösung herzustellen, und anschließend sequentielles Zugeben eines quervernetzbaren Monomers und eines anorganischen Partikels zu der ersten Elektrolytlösung, gefolgt von Rühren und Dispergieren derselben, um eine erste Elektrolytpaste herzustellen;
(b) Lösen eines Lithiumsalzes in einem organischen Lösungsmittel mit einer Dielektrizitätskonstante von 20 oder weniger, um eine zweite Elektrolytlösung herzustellen, und anschließend sequentielles Zugeben eines quervernetzbaren Monomers und eines anorganischen Partikels zu der zweiten Elektrolytlösung, gefolgt von Rühren und Dispergieren derselben, um eine zweite Elektrolytpaste herzustellen;
(c) Auftragen der ersten Elektrolytpaste auf die Oberfläche einer Positivelektrode, gefolgt von Polymerisation derselben, um einen ersten Elektrolyten in einer Festphase zu bilden;
(d) Auftragen der zweiten Elektrolytpaste auf die Oberfläche des so gebildeten ersten Elektrolyten, gefolgt von Polymerisation derselben, um einen zweiten Elektrolyten in einer Festphase zu bilden; und
(e) Anbringen einer Negativelektrode auf dem zweiten Elektrolyten.

## Revendications

1. Complexe d'électrolytes pour une batterie au lithium-soufre, le complexe d'électrolytes comprenant deux types d'électrolytes solides séparés en phase sous la forme d'une structure stratifiée, ceux-ci étant un premier électrolyte solide apte à être positionné sur le côté d'électrode positive et un second électrolyte solide apte à être positionné sur le côté d'électrode négative ;
dans lequel le premier électrolyte solide comprend un solvant organique présentant une constante diélectrique de 30 ou plus, un sel de lithium, un polymère formé par polymérisation d'un monomère réticulable et une particule inorganique ; et
dans lequel le second électrolyte solide comprend un solvant organique présentant une constante diélectrique de 20 ou moins, un sel de lithium, un polymère formé par polymérisation d'un monomère réticulable et une particule inorganique.

2. Complexe d'électrolytes selon la revendication 1, dans lequel le solvant organique présentant une constante diélectrique de 30 ou plus est sélectionné parmi un solvant organique à base de sulfone, un solvant organique à base de nitrile, un solvant organique à base de carbonate et une gamma-butyrolactone.

3. Complexe d'électrolytes selon la revendication 1, dans lequel le sel de lithium contenu dans le premier électrolyte solide est au moins l'un parmi le bis(trifluorométhane sulfonyl)imide de lithium, le bis(fluorosulfonyl)imide de lithium, le perchlorate de lithium, l'hexafluoroarsénate de lithium, le tétrafluoroborate de lithium, l'hexafluorophosphate de lithium, l'hexafluoroantimonate de lithium, le difluorométhanesulfonate de lithium, l'aluminate de lithium, le tétrachloroaluminate de lithium, le chlorure de lithium, l'iodure de lithium, le bis(oxalate)borate de lithium et le trifluorométhanesulfonylimide de lithium.

4. Complexe d'électrolytes selon la revendication 1, dans lequel le monomère réticulable à partir duquel le polymère contenu dans le premier électrolyte solide est produit est au moins l'un parmi le triacrylate d'éthoxylate de triméthylolpropane, le diacrylate de polyéthylène glycol, le diacrylate de triéthylène glycol et le diméthacrylate d'éthoxylate de bisphénol A.

5. Complexe d'électrolytes selon la revendication 1, dans lequel la particule inorganique contenue dans le premier électrolyte solide est au moins l'une parmi l'alumine (Al₂O₃), le dioxyde de silicium (SiO₂), le dioxyde de titane (TiO₂), le titanate de baryum (BaTiO₃), l'oxyde de lithium (Li₂O), le fluorure de lithium (LiF), l'hydroxyde de lithium (LiOH), le nitrure de lithium (Li₃N), l'oxyde de baryum (BaO), l'oxyde de sodium (NazO), le carbonate de lithium (Li₂CO₃), le carbonate de calcium (CaCO₃), l'aluminate de lithium (LiAlO₂), le titanate de strontium (SrTiO₃), l'oxyde d'étain (SnO₂), l'oxyde de cérium (CeO₂), l'oxyde de magnésium (MgO), l'oxyde de nickel (NiO) l'oxyde de calcium (CaO), l'oxyde de zinc (ZnO), le dioxyde de zirconium (ZrO₂) et le carbure de silicium (SiC).

6. Complexe d'électrolytes selon la revendication 1, dans lequel l'épaisseur du premier électrolyte solide est de 100 µm ou moins.

7. Complexe d'électrolytes selon la revendication 1, dans lequel le solvant organique présentant une constante diélectrique de 20 ou moins est sélectionné parmi un solvant organique à base d'éther, le tétrahydrofurane et le dioxolane.

8. Complexe d'électrolytes selon la revendication 1, dans lequel le sel de lithium contenu dans le second électrolyte solide est au moins l'un parmi le bis(trifluorométhane sulfonyl)imide de lithium, le bis(fluorosulfonyl)imide de lithium, le perchlorate de lithium, l'hexafluoroarsénate de lithium, le tétrafluoroborate de lithium, l'hexafluorophosphate de lithium, l'hexafluoroantimonate de lithium, le difluorométhanesulfonate de lithium, l'aluminate de lithium, le tétrachloroaluminate de lithium, le chlorure de lithium, l'iodure de lithium, le bis(oxalate)borate de lithium et le trifluorométhanesulfonylimide de lithium.

9. Complexe d'électrolytes selon la revendication 1, dans lequel le monomère réticulable à partir duquel le polymère contenu dans le second électrolyte solide est produit est au moins l'un parmi le triacrylate d'éthoxylate de triméthylolpropane, le diacrylate de polyéthylène glycol, le diacrylate de triéthylène glycol et le diméthacrylate d'éthoxylate de bisphénol A.

10. Complexe d'électrolytes selon la revendication 1, dans lequel la particule inorganique contenue dans le second électrolyte solide est au moins l'une parmi l'alumine (Al₂O₃), le dioxyde de silicium (SiO₂), le dioxyde de titane (TiO₂), le titanate de baryum (BaTiO₃), l'oxyde de lithium (Li₂O), le fluorure de lithium (LiF), l'hydroxyde de lithium (LiOH), le nitrure de lithium (Li₃N), l'oxyde de baryum (BaO), l'oxyde de sodium (NazO), le carbonate de lithium (Li₂CO₃), le carbonate de calcium (CaCO₃), l'aluminate de lithium (LiAlO₂), le titanate de strontium (SrTiO₃), l'oxyde d'étain (SnO₂), l'oxyde de cérium (CeO₂), l'oxyde de magnésium (MgO), l'oxyde de nickel (NiO) l'oxyde de calcium (CaO), l'oxyde de zinc (ZnO), le dioxyde de zirconium (ZrO₂) et le carbure de silicium (SiC).

11. Complexe d'électrolytes selon la revendication 1, dans lequel l'épaisseur du second électrolyte solide est de 100 µm ou moins.

12. Dispositif électrochimique comprenant le complexe d'électrolytes selon la revendication 1 et une électrode faisant face au complexe d'électrolytes.

13. Procédé de préparation d'un dispositif électrochimique incluant un complexe d'électrolytes, qui comprend les étapes suivantes de :
(a) dissolution d'un sel de lithium dans un solvant organique présentant une constante diélectrique de 30 ou plus pour préparer une première solution d'électrolyte, et ensuite l'ajout séquentiel d'un monomère réticulable et d'une particule inorganique à la première solution d'électrolyte suivi par l'agitation et la dispersion de celle-ci pour préparer une première pâte d'électrolyte ;
(b) dissolution d'un sel de lithium dans un solvant organique présentant une constante diélectrique de 20 ou moins pour préparer une seconde solution d'électrolyte, et ensuite l'ajout séquentiel d'un monomère réticulable et d'une particule inorganique à la seconde solution d'électrolyte suivi par l'agitation et la dispersion de celle-ci pour préparer une seconde pâte d'électrolyte ;
(c) revêtement de la première pâte d'électrolyte sur la surface d'une électrode positive, suivi par la polymérisation de celle-ci pour former un premier électrolyte dans une phase solide ;
(d) revêtement de la seconde pâte d'électrolyte sur la surface du premier électrolyte ainsi formé, suivi par la polymérisation de celle-ci pour former un second électrolyte dans une phase solide ; et
(e) fixation d'une électrode négative sur le second électrolyte.
